# EUROPEAN PATENT SPECIFICATION

(11) **EP 4 031 443 B1**
(45) Date of publication and mention of the grant of the patent: **31.07.2024**
(21) Application number: 20780305.7
(22) Date of filing: 18.09.2020
(51) Int. Cl.: B62K 21/02, B62J 17/00, B62K 19/02, B62K 21/04, B62K 21/12, B62K 21/18, B62K 3/04, B62J 1/08, B62K 19/36

(54) **IMPROVEMENTS IN OR RELATING TO BICYCLES**
VERBESSERUNGEN AN ODER IN ZUSAMMENHANG MIT FAHRRÄDERN
AMÉLIORATIONS APPORTÉES OU RELATIVES À DES BICYCLETTES

(30) Priority: 20.09.2019 GB 201913619
(43) Date of publication of application: 27.07.2022
(73) Proprietor: English Institute of Sport Limited, Manchester M11 3BS (GB); The British Cycling Federation, Manchester M11 4DQ (GB)
(72) Inventor: PURNELL, Anthony John, Manchester M11 4DQ (GB); HEBERT, Christopher Charles, Manchester M11 4DQ (GB); ASHTON, Neil James, Manchester M11 4DQ (GB); MATTHEWS, Richard, Manchester M11 4DQ (GB); STEVENS, Gregory Martin, Manchester Institute of Health And Performance 299 Alan Turing Way Manchester M11 3BS (GB)
(74) Representative: Wilson Gunn
(86) International application number: PCT/GB2020/052270
(87) International publication number: WO 2021/053352

(56) References cited:
- EP-A1- 2 982 590
- WO-A1-2018/065383
- GB-A- 2 501 894
- JP-U- H0 678 186
- US-A- 3 979 136
- US-A- 4 453 730
- US-A1- 2007 187 922
- US-A1- 2007 228 689
- US-A1- 2014 197 616
- US-B2- 8 651 505

## Description

### Technical Field of the Invention

The present invention relates to bicycles. In particular, the present invention relates to the front forks, seat stays and seat posts of bicycles.

### Background to the Invention

A key factor in the performance of racing cyclists is the drag encountered by the cyclist as they travel along the race course or track. Accordingly, many racing cyclists wear clothing and helmets specifically adapted to minimise drag. Similarly, many racing bicycles are adapted to minimise the drag of the bicycle. Typically, many bicycle frames are tested extensively in a wind tunnel before use to fine tune the design so as to minimise drag caused by the frame.

A typical conventional bicycle comprises a pair of front forks. The front forks extend downwardly from a crown to engage opposing ends of the front axle of the bicycle. In a conventional bicycle design, the front forks are relatively thin and closely spaced either side of the plane of the front wheel of the bicycle. In such conventional designs, the forks typically diverge away from the crown. One alternative fork arrangement has been proposed in GB 2501894. In this document, the bicycle comprises a pair of front forks extending downwards and inclined inwardly from a substantially horizontal member, wherein the ends of the horizontal member are aligned to the middle of the knees of a rider in a normal riding position. This fork design does provide some benefit in reducing drag but has not provided consistent benefits in practice for a sufficiently wide range of riders for regular implementation.

WO2018065383A1 discloses a racing bicycle, in particular for time trials, triathlons or suchlike, comprising a frame provided with a head tube, a top tube and a fork connectable on one side to the head tube and on the other side to a wheel of the bicycle; in the fork one or more apertures are made for the passage of the air, made between the external surface of the wheel and the top of the head tube; the one or more apertures are configured to allow at least part of the stream of air that hits the bicycle to pass in a central zone of the bicycle and in proximity to the frame; the top tube is positioned above the one or more apertures in order to leave the central zone free, and therefore not interfere with the stream of air passing in the central zone and below the top tube. Said WO2018065383A1 discloses a bicycle according to the preamble of claim 1.

US20140197616A1 discloses an unmotorized sand-rideable bicycle utilizes oversized balloon tires that have an enlarged footprint to permit the bicycle to ride up over even loose sand to provide ease of pedalling, as well as enhanced steering and stability over that associated with standard bicycles. A positive traction gear assembly may be employed to switch between single and dual rear wheel drive.

US8651505B2 discloses a bicycle providing increased power transfer and improved aerodynamic characteristics. The bicycle includes a seat assembly that supports the anterior pelvic region so the rider extends forwardly over the bicycle instead of in an upright position. The bicycle also includes a rear mounted drive assembly to increase the power transfer from the rider.

JPH0678186U discloses ong object support for securely and safely fixing a golf club, a fishing rod, etc. in the front-rear direction of the centre portion of a motorcycle, and safely transporting a long object.

US3979136A teaches a foldable bicycle divided into a front frame part and a rear frame part. The front frame part and the rear frame part are hingedly connected together. A front fork and steering assembly is hingedly connected to the front frame part. A saddle supporting assembly is hingedly connected to the rear frame part. Locking means are provided in operative association with each of the hinged connections.

US20070187922A1 discloses self-extending, collapsible bicycle, which is self-extending upon the operation of a simple control and having: collapsible frame portions moveable between collapsed and extended positions, self-powering devices connecting the frame portions which are operable to extend the frame portions, and a control connected to the self-powering devices.

It is therefore an object of the present invention to provide an improved bicycle.

### Summary of the Invention

According to a first aspect of the present invention there is provided a bicycle according to claim 1. Preferred embodiments of the bicycle of the invention are provided in dependent claims 2-11.

A bicycle according to the present invention provides reduced drag when a rider is positioned in a normal riding position. In particular, whilst the relatively wide spacing of the forks may increase the overall drag produced by the frame, the alignment of the forks with the lower legs of the rider reduces the overall drag of the bicycle and rider combination.

The relative terms up, down, horizontal, vertical, front, rear, inward, outward etc used herein will be readily understood by the skilled man as refences to a normal upright position of the bicycle and/or rider when cycling in a linear direction on a flat surface.

In one embodiment, widely spaced forks may be defined by reference to their alignment with the rider. In such an embodiment, the widely spaced forks are each aligned with the axis of the lower leg of a rider in a normal riding position. As a result, the aerodynamic wake generated by each fork impinges on the rider's respective legs. In such embodiments, aligned forks are positioned such that the axis of the fork is coincident with the axis of the lower leg when viewed from a plane perpendicular to the direction of linear forward motion of the bicycle. In particular embodiments, the spacing and alignment of the forks may be selected to match the riding position of a particular rider. In such embodiments, a deviation of less than say 25mm between the axis of the fork and the axis of the lower leg when viewed from a plane perpendicular to the direction of linear forward motion of the bicycle may be considered aligned. In such embodiments, the axis of the lower leg may be defined as the average axial position of the lower leg during the cycling motion of the rider. This thereby takes into account deviations in leg axis that occur as part of the cycling motion.

In one embodiment, widely spaced forks may be defined by reference to the pedal crank spacing (typically referred to as the Q-factor). The Q-factor, plus the pedal size and the orientation of the connecting cleat on the rider's shoe help define the leg spacing of the rider. Nevertheless, since in many instances riders adopt a riding position with their heels turned inward, the effective leg axis position is slightly inward of what might be expected from adding Q-factor to pedal width. In such embodiments, the fork spacing may be in the range of Q-factor plus 60-90mm. In other such embodiments, the fork spacing may be in the range of Q-factor plus 60-80mm or Q-factor plus 70-90mm. In further such embodiments, the fork spacing may be in the range of Q-factor plus 60-70mm, Q-factor plus 70-80mm or Q-factor plus 80-90mm.

In one embodiment, widely spaced forks may be defined by reference to absolute fork spacing. In such embodiments, the fork spacing may be in the range 180-240mm. In some such embodiments, the fork spacing may be in the range 180-220mm. In other such embodiments the fork spacing may be in the range 200-240mm or in the range 205mm to 240mm.

The fork spacing discussed above may be defined as the spacing between the centres of the respective forks.

The end of each fork distal from the crown may comprise an axle receiving formation. The axle receiving formation may be a slot or hole. Each fork may comprise a single substantially linear member extending between the crown and the axle receiving formation. In other embodiments, the forks may comprise a primary portion extending from the crown, the primary portion comprising a single substantially linear member and a secondary portion connecting the primary portion to the axle receiving formation. The secondary portion may be inclined relative to the primary portion. In particular, the secondary portion may be inclined inwardly relative to the primary portion. The secondary portion can thereby conveniently enable connection between the forks and a conventional bicycle wheel axle.

The secondary portion may be orientated at a constant angle relative to the axis of the primary portion of the fork. In other embodiments, the orientation of the secondary portion may vary relative to the axis of the primary portion at different positions along the length of the secondary portion.

The secondary portion may comprise less than 20% of the length of the fork. In other embodiments, the secondary portion may comprise less than 15% of the length of the fork, less than 10% of the length of the fork, or less than 5% of the length of the fork.

In one embodiment, the primary portion extends to a position in range of 80-100mm above the axle receiving formation. The above restrictions allow the primary portion to be aligned in with a rider's lower leg to minimise drag of the leg and fork combination and the secondary portion, which does not provide an influence on the airflow experienced by a rider's leg to be adapted to minimise drag on the secondary portion alone.

Each fork may comprise a single member. Alternatively, each fork may comprise two or more fork members. Each fork member may be substantially parallel and connected to a common crown and a common axle receiving formation. Each fork member may have a substantially similar cross-sectional profile. Alternatively, each fork member may have different cross-sectional profile. Fork members may be offset relative to each other parallel and/or perpendicular to direction of linear forward motion of the bicycle.

The crown may comprise one or more lateral members. In some embodiments, the lateral members may be substantially horizontal. In other embodiments, the lateral members may be angled or curved upwards or downwards. The crown may comprise one or more extension members projecting upwardly from said one or more lateral members. The extension members may be in a common alignment with the forks or at least the primary portion of each fork.

The extension members may comprise a lateral section at their upward end. In some embodiments, the lateral sections may be substantially horizontal. In other embodiments, the lateral sections may be angled or curved upwards or downwards. Alternatively, the extension members may be connected to one or more lateral members at their upward end. The one or more lateral members may comprise a handle bar or the stem of the bicycle.

The crown may be connected to a steerer tube. The crown may be connected to an upwardly extending central member. In this manner, the forms may have a `bayonet type' form. The crown may be connected to a head tube. The connection may be facilitated by a rotating bearing, where necessary. The head tube may be a bifurcated head tube. The head tube may be a wide head tube. In the present invention a wide head tube may be defined as a head tube wider than say 30mm.

The forks may be substantially linear or alternatively may be curved when viewed in a vertical or horizontal plane parallel to the direction of linear forward motion of the bicycle.

The forks and/the crown may be formed from members having a substantially circular, elliptical or airfoil shaped cross-sectional profile. Such profiles may include truncated elliptical or airfoil cross-sectional profiles. In some embodiments, the trailing edge of the forks and/or crown, relative to the direction of linear forward motion, may be substantially concave. This provides a scalloped trailing edge. This can improve performance in the presence of a cross wind or yaw airflow.

The forks and/or crown may have a cross-sectional chord to thickness ratio of say, 3:1, 6:1 or more. The forks and/or crown may have a cross-sectional thickness and/or chord to thickness ratio that complies with governing body regulations. In some cases, the forks and/or crown may have a cross-sectional thickness of at least 10mm. In further cases, the forks and/or crown may have a cross-sectional thickness of at least 15mm. In some cases, the forks and/or crown may have a chord of 80mm or less. This would facilitate conformance with particular governing body regulations.

The bicycle may be a racing bicycle. The racing bicycle may be a track racing bicycle. The bicycle may be a time trial bicycle. The bicycle may be a road racing bicycle. The road racing bicycle may be adapted for use in pure cycling races or for use in cycling races comprising part of a combined race such as a triathlon or duathlon.

According to the invention, the bicycle comprises a pair of seat stays, each seat stay extending downwardly and substantially parallel to each other from a crown, the seat stays widely spaced apart from each other and a wheel mounted therebetween.

In one embodiment, widely spaced stays may be defined by reference to their alignment with the rider. In such an embodiment, the widely spaced stays are each aligned with the axis of the lower leg of a rider in a normal riding position. As a result, the aerodynamic wake generated by each of the rider's legs impinges on the respective stay. In such embodiments, aligned stays are positioned such that the axis of the stay is coincident with the axis of the lower leg when viewed from a plane perpendicular to the direction of linear forward motion of the bicycle. In particular embodiments, the

bicycle. The road racing bicycle may be adapted for use in pure cycling races or for use in cycling races comprising part of a combined race such as a triathlon or duathlon.

In one embodiment, widely spaced stays may be defined by reference to their alignment with the rider. In such an embodiment, the widely spaced stays are each aligned with the axis of the lower leg of a rider in a normal riding position. As a result, the aerodynamic wake generated by each of the rider's legs impinges on the respective stay. In such embodiments, aligned stays are positioned such that the axis of the stay is coincident with the axis of the lower leg when viewed from a plane perpendicular to the direction of linear forward motion of the bicycle. In particular embodiments, the spacing and alignment of the stays may be selected to match the riding position of a particular rider. In such embodiments, a deviation of less than say 25mm between the axis of the stay and the axis of the lower leg when viewed from a plane perpendicular to the direction of linear forward motion of the bicycle may be considered aligned. In such embodiments, the axis of the lower leg may be defined as the average axial position of the lower leg during the cycling motion of the rider. This thereby takes into account deviations in leg axis that occur as part of the cycling motion.

According to the invention, the widely spaced stays are defined by reference to the pedal crank spacing (typically referred to as the Q-factor). The Q-factor, plus the pedal size and the orientation of the connecting cleat on the rider's shoe help define the leg spacing of the rider. Nevertheless, since in many instances riders adopt a riding position with their heels turned inward, the effective leg axis position is slightly inward of what might be expected from adding Q-factor to pedal width. According to the invention, the stay spacing is in the range of Q-factor plus 40-90mm. In some embodiments, the stay spacing may be in the range Q factor plus 60-90mm. In other embodiments, the stay spacing may be in the range of Q-factor plus 60-80mm or Q-factor plus 70-90mm. In further embodiments, the stay spacing may be in the range of Q-factor plus 40-60mm, Q-factor plus 60-70mm, Q-factor plus 70-80mm or Q-factor plus 80-90mm.

In one embodiment, widely spaced stays may be defined by reference to absolute stay spacing. In such embodiments, the stay spacing may be in the range 170-240mm. In some such embodiments, the stay spacing may be in the range 190-220mm. In other such embodiments the stay spacing may be in the range 200-240mm or in the range 205mm to 240mm.

The stay spacing discussed above may be defined as the spacing between the centres of the respective stays.

The end of each stay distal from the crown may comprise an axle receiving formation. The axle receiving formation may be a slot or hole. Each stay may comprise a single substantially linear member extending between the crown and the axle receiving formation. In other embodiments, the stays may comprise a primary portion extending from the crown, the primary portion comprising a single substantially linear member and a secondary portion connecting the primary portion to the axle receiving formation The secondary portion may be inclined relative to the primary portion. In particular, the secondary portion may be inclined inwardly relative to the primary portion. The secondary portion can thereby conveniently enable connection between the stays and a conventional bicycle wheel axle.

The secondary portion may be orientated at a constant angle relative to the axis of the primary portion of the stay. In other embodiments, the orientation of the secondary portion may vary relative to the axis of the primary portion at different positions along the length of the secondary portion.

The secondary portion may comprise less than 20% of the length of the stay. In other embodiments, the secondary portion may comprise less than 15% of the length of the stay, less than 10% of the length of the stay, or less than 5% of the length of the stay.

In one embodiment, the primary portion extends to a position in range of 80-100mm above the axle receiving slot. The above restrictions allow the primary portion to be aligned in with a rider's lower leg to minimise drag of the leg and stay combination and the secondary portion, which does not provide an influence on the airflow experienced by a rider's leg to be adapted to minimise drag on the secondary portion alone.

Each stay may comprise a single member. Alternatively, each stay may comprise two or more fork members. Each stay member may be substantially parallel and connected to a common crown and a common axle receiving formation. Each stay member may have a substantially similar cross-sectional profile. Alternatively, each stay member may have different cross-sectional profile. Stay members may be offset relative to each other parallel and/or perpendicular to the direction of linear forward motion of the bicycle.

The crown may comprise one or more lateral members. In some embodiments, the lateral members may be substantially horizontal. In other embodiments, the lateral members may be angled or curved upwards or downwards. The crown may comprise one or more extension members projecting upwardly from said one or more lateral members. The extension members may comprise a lateral section at their upward end. In some embodiments, the lateral sections may be substantially horizontal. In other embodiments, the lateral sections may be angled or curved upwards or downwards. Alternatively, the extension members may be connected to one or more lateral members at their upward end. The one or more lateral members may comprise a saddle, saddle post or saddle support of the bicycle. The extension members may be in a common alignment with the stays or at least the primary portion of each stay.

The stays or extension members may comprise an extendable or telescopic section.

The crown may be connected to a seat tube of the bicycle. The crown may connect to the seat tube at the same vertical location as the seat tube connects to the top tube. Additionally or alternatively, the crown may connect to the seat tube above or below the connection to the top tube.

The stays may be substantially linear or alternatively may be curved when viewed in a vertical or horizontal plane parallel to the direction of linear forward motion of the bicycle.

The separation of the stays from the leg in the direction of motion of the stays may be adjusted to match the vortex shed wavelength of the leg for at least some proportion of the rotation of the pedals. This can help further reduce drag on the leg by taking advantage of the splitter plate effect.

The stays and/or crown may be formed from members having a substantially circular, elliptical or airfoil shaped cross-sectional profile. Such profiles may include truncated elliptical or airfoil cross-sectional profiles. In some embodiments, the trailing edge of the stays and/or crown, relative to the direction of linear forward motion, may be substantially concave. This provides a scalloped trailing edge. This can improve performance in the presence of a cross wind or yaw airflow.

The stays and/or crown may have a cross-sectional chord to thickness ratio of say, 3:1, 6:1 or more. The stays and/or crown may have a cross-sectional thickness and/or chord to thickness ratio that complies with governing body regulations. In some cases, the stays and/or crown may have a cross-sectional thickness of at least 10mm. In further cases, the stays and/or crown may have a cross-sectional thickness of at least 15mm. In some cases, the stays and/or crown may have a chord of 80mm or less. This would facilitate conformance with particular governing body regulations.

The bicycle may be provided with a saddle. The saddle may comprise a seat surface and a seat post wherein the seat post comprises two widely spaced limbs. The saddle may comprise a trunk. The trunk may comprise an elongate member adapted for fitting to or within a seat tube of a bicycle.

In one embodiment, widely spaced limbs may be defined by reference to their alignment with the rider. In such an embodiment, the widely spaced limbs are at least partially aligned with the axis of the upper leg of a rider in seated riding position. As a result, the aerodynamic wake generated by each leg impinges on the respective limb. In particular, the widely spaced limbs may be matched to the rider's hip separation.

In one embodiment, widely spaced limbs may be defined by reference to the saddle width. In such embodiments, the widely spaced limbs have at least a portion separated by substantially the full width of the saddle.

In one embodiment, widely spaced limbs may be defined by reference to absolute limb spacing. In such embodiments, the limb spacing may be in the range 120-180mm or from 120-240 mm for at least a portion of their length.

The widely spaced limbs may extend between the trunk and the seat surface. The widely spaced limbs may be connected to the edges of the seat surface. This maximises the spacing width of the widely spaced limbs. The limbs may extend linearly between the stem and the seat surface. Such limbs may essentially have a 'V' formation. In other embodiments, the limbs may be curved. Such limbs may essentially have a 'U' formation. Additionally or alternatively, the limbs may be curved when viewed in a plane parallel to the direction of linear forward motion of the bicycle. This can enable the limbs to be shaped so as avoid impeding the rider's normal pedalling action. In some embodiments, the limbs may extend downwardly and be connected to the trunk or the top tube by a lateral member.

The limbs and the seat surface may be integrally formed.

The widely spaced limbs and/or the stem may be formed from members having a substantially circular, elliptical or airfoil shaped cross-sectional profile. Such profiles

may include truncated elliptical or airfoil profiles. The limbs may have a cross-sectional depth to thickness ratio of say, 6:1 or more. The limbs may have a cross-sectional thickness that complies with governing body regulations. In some cases, the limbs may have a cross-sectional thickness of at least 10mm. In further cases, the limbs may have a cross-sectional thickness of at least 15mm.

A bicycle according to the present invention thus provides reduced drag when a rider is positioned in a normal riding position. In particular, whilst the relatively wide spacing of the stays in the present invention may increase the overall drag produced by the frame, the alignment of the stays with the lower legs of the rider reduces the overall drag of the bicycle and rider combination.

According to a second aspect of the present invention there is provided a method of fitting a bicycle for a rider according to claim 12.

In the above implementation leg separation may be measured in a normal riding position. Leg separation may be considered matched to fork or stay separation when there is a deviation of less than 25mm between leg separation and fork or stay or limb separation.

### Detailed Description of the Invention

In order that the invention may be more clearly understood one or more embodiments thereof will now be described, by way of example only, with reference to the accompanying drawings, of which:
- Figure 1: shows a head on view of a conventional pair of front forks of a racing bicycle;
- Figure 2: shows a head on view of a racing bicycle with a pair of front forks according to one prior art document;
- Figure 3: shows a head on view of a racing bicycle with a pair of front forks according to one embodiment of the present invention;
- Figure 4: is a schematic diagram illustrating the variation of the drag coefficient of a cylinder with respect to Reynolds number;
- Figure 5: is a schematic cross-sectional view illustrating different possible fork cross-sectional profiles;
- Figure 6: shows head on views of a racing bicycle with a pair of front forks according to alternative embodiments of the present invention;
- Figure 7: shows a schematic rear view of a conventional pair of seat stays of a racing bicycle;
- Figure 8: shows a schematic rear view of a racing bicycle with a pair of seat stays according to one embodiment of the present invention;
- Figure 9: shows a schematic rear view of a racing bicycle with a pair of seat stays according to alternative embodiments of the present invention;
- Figure 10: shows embodiments of a bicycle frame incorporating front forks and seat stays according to the present invention;
- Figure 11: shows (a)-(c) alternative embodiments of a saddle for a bicycle according to the present invention and (d) a saddle according to figure 11a fitted to a bicycle frame according to figure 10; and
- Figure 12: is a schematic diagram illustrating the splitter plate effect exploited by a pair of widely spaced rear stays according to the present invention.

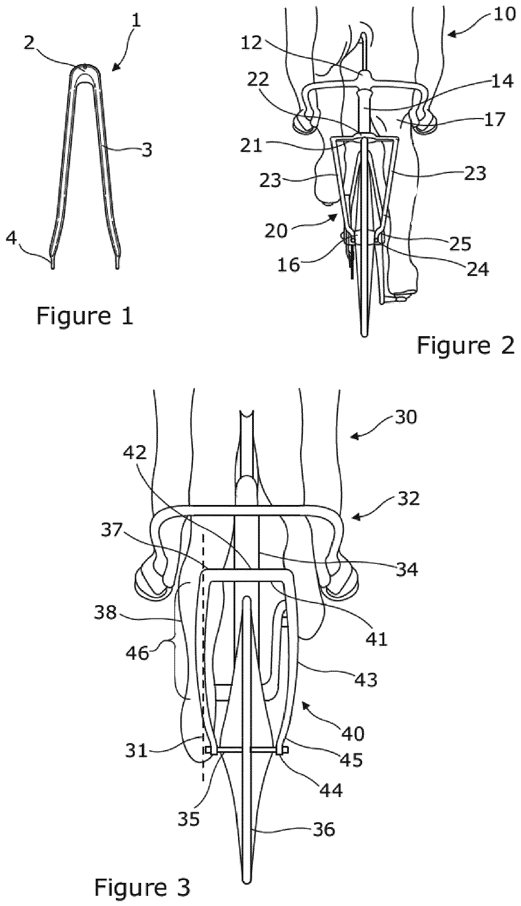

Turning now to figure 1, a pair of conventional bicycle forks 1 comprises a crown 2 which is attached to the headstock of a bicycle (not shown) and a pair of inclined forks 3 extending downwardly from the crown 2. At the lower end of forks 3 are provided axle receiving slots 4. This enables the axle and hence the front wheel (not shown) of the bicycle to be fitted between the forks 3. As can be seen clearly in figure 1, the conventional forks 3 diverge outwardly away from the crown 2. Additionally, such forks 3 are relatively closely spaced with respect to a wheel fitted therebetween.

Turning now to figure 2, a cyclist 10 is shown in a normal riding position on a bicycle 12 as disclosed in GB2501894. The bicycle 12 has a front fork 20, within which the front wheel 16 is mounted, attached to the head tube 14 of the bicycle 12. The crown comprises a substantially horizontal member 21 connected to the headstock 14 at the midpoint 22. The length of horizontal member 21 is such that its ends are roughly aligned with the leading knee 17 of the cyclist 10, when in the riding position. Extending downwardly from each end of the horizontal member 21 are inwardly inclined forks 23. At their lower ends of the forks are axle receiving formations 24, typically slots or holes. The forks 23 comprise a more inwardly inclined secondary portion 25 just above the formations 24.

The front fork 20 of the bicycle 12 of figure 2 does provide for a drag reduction compared with a racing bicycle using a conventional front fork 1. Nevertheless, the drag reduction can be improved further by use of a fork according to the present invention

Turning now to figure 3, a cyclist 30 is shown in a normal riding position on a bicycle 32 according to one embodiment of the present invention. The bicycle 32 has a front fork 40, within which the front wheel 36 is mounted, attached to the head tube 34. The crown comprises a lateral member 41. As shown in figure 3, the lateral member 41 is substantially horizontal. Nevertheless, the skilled man will appreciate that the lateral member 41 could deviate from the horizontal upwardly or downwardly. The lateral member 41 connected to the headstock 34 at the midpoint 42. The length of horizontal member 41 is such that its ends are roughly aligned with the leading knee 37 of the cyclist 30, when in the riding position. Extending downwardly from each end of the lateral member 41 are downwardly projecting forks 43. At the lower ends of the forks 43 are axle receiving formations 44, typically slots or holes, for receiving the axle 35 of wheel 36. As shown in figure 3, the forks 43 each comprise a primary portion 46, the respective primary portions extending downwardly and substantially parallel to each other and an inwardly inclined secondary portion 45 just above the formations 44. This facilitates fitting conventional bicycle wheels 36 into the front fork 40. Nevertheless, the skilled man will appreciate that the inwardly inclined secondary portions 45 can be omitted if a wheel 36 with a longer axle is fitted or if the axle receiving formations 44 are provided on cross-members projecting perpendicular to the forks 43.

As can be seen clearly in figure 3, the longitudinal axes 31 of both the main portion 46 and the rider's lower leg 38 are aligned. When travelling forward, the forks 43 thereby create a wake in front of the rider's lower leg 38. The lower leg 38 will itself create a further wake. Accordingly, by aligning the wakes created by the forks 43 and the lower leg 38 a reduction in overall system drag is provided. This occurs because the presence of the forks with this alignment lowers the effective wind speed experienced by the riders legs. More specifically and additionally, the turbulent wake created by forks 43 pushes the onset of the drag crises phenomenon on the riders feet and legs to lower speeds resulting in further drag reduction.

Where close alignment between the axes 31 of the forks 43 and legs 38 can be maintained, considerable reductions drag can be achieved. In particular, rider testing has measured typical drag reductions of 0.5% to 2% in racing conditions and of up to 2.5% or 3% over a conventional fork. Furthermore, once the fork separation is adequately fitted for a rider, these drag reductions may be reliably achieved in racing conditions, which is not guaranteed in the prior art. Additionally, theoretical analysis has indicated that drag reductions of up to 5% may be achieved with particular riders, when the forks 43 are combined with seat stays 63 as discussed below. In practice, best results have been observed for riders with relatively slim legs. Nevertheless, significant benefits may still be measured for riders with relatively thicker legs.

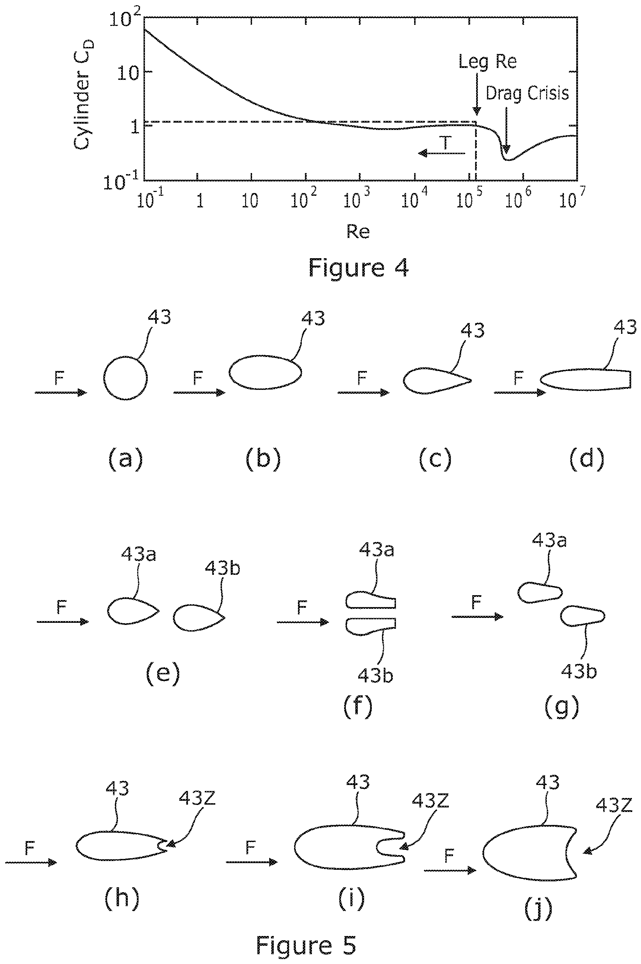

Turning to figure 4 this comprises an illustration of the drag coefficient C_{D} of a cylinder (a simple approximation of the rider's lower leg) in relation to the Reynolds number Re of the airflow. In normal cycling conditions, the airflow around the leg will have a laminar boundary layer and the drag coefficient will be determined by this relatively ordered flow, as illustrated by Leg Re on figure 4. The turbulent wake created by the forks 43 pushes the onset of the drag crises (as illustrated by arrow T) where turbulent boundary layer flow reduces drag to lower speeds. Accordingly, whilst the wide spaced forks 43 may increase the coefficient of drag of the bicycle frame considered in isolation, the consequent reduction of the coefficient of drag of the rider's lower legs by pushing the flow around the legs into the drag crises zone reduces the overall coefficient of drag of the rider and bicycle combination.

In use, to maximise benefits, the separation of the forks 43 is customised for a particular rider. This optimises benefits for particular riders based on their physical size and/or riding position. Nevertheless, good results can be obtained for a wide range of riders with fork 43 separation in the region of say 180-240mm.

The forks 43 can have any suitable cross-sectional profile. In figure 5, substantially (a) circular, (b) ovoid, (c) airfoil and truncated airfoil based cross-sectional fork profiles are illustrated, relative to airflow direction F. Whilst the profiles illustrated in figure 5 are substantially symmetrical with respect to the airflow direction F, the skilled man will appreciate that the invention equally applies to asymmetrical profiles. The skilled man will further appreciate that the sections illustrated in figure 5 may be differently orientated to the airflow direction F, if desired.

Figure 5 further illustrates at (e), (f) and (g) that forks 43 can be formed from a pair of fork members 43a, b rather than a single fork member 43. The pair of fork members 43a, b can be spaced (e) parallel to (or close to parallel to) the airflow direction F as shown, (f) perpendicular (or close to perpendicular to) the airflow direction F, or (g) offset both parallel to and perpendicular to the airflow direction F.

Figure 5 further illustrates at (h), (i) and (j) that forks 43 can be provided with a concave or scalloped trailing edge 43z. This form of trailing edge can provide an improved drag performance in a given cross-wind or yaw airflow. In particular, the scalloped trailing edge 43z delays separation of the airflow. Whilst at a small yaw this may have a relatively small effect, at larger yaw angles, it may delay stall, with a corresponding larger effect on overall drag.

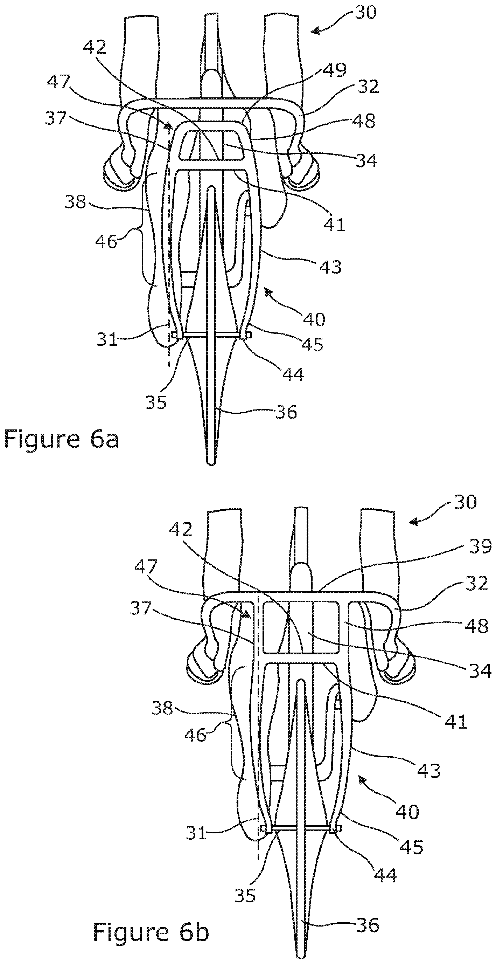

Turning now to figure 6a, a cyclist 30 is shown in a normal riding position on a bicycle 32 according to an alternative embodiment of the present invention. This embodiment differs from the previous embodiment in that the crown comprises extension members 47 projecting upwardly from the lateral crown member 41.

The extension members 47 comprise a substantially upward projecting section 48 which maintains a substantially common alignment with the main portion 46 of the forks and hence a substantially common alignment with the rider's lower leg 38. Accordingly, the extension members provide further improved drag performance for the combination of the bicycle 32 and rider 30, even if the overall frame drag is increased by the extension members 47. As is shown in figure 6a, the extension members 47 have a horizontal or substantially horizontal section 49 at their upward end. This allows connection to the stem. This may be required to ensure conformance with certain bicycle racing regulations.

Turning now to figure 6b, a cyclist 30 is shown in a normal riding position on a bicycle 32 according to a further alternative embodiment of the present invention. This embodiment differs from the embodiment of figure 6a in that the upward projecting section 48 of each extension member 47 is terminated at the handle bar 39 rather than a horizontal section 49 of the extension member 47.

This can maintain alignment between the extension member 47 and the lower leg 38 right up to the handle bar. This embodiment can therefore provide increased drag reduction benefits, in circumstances where such non-conventional bicycle frames are permitted.

In the embodiments of both figures 6a and 6b, the forks 43 can have cross-sectional profiles of the type shown in figure 5.

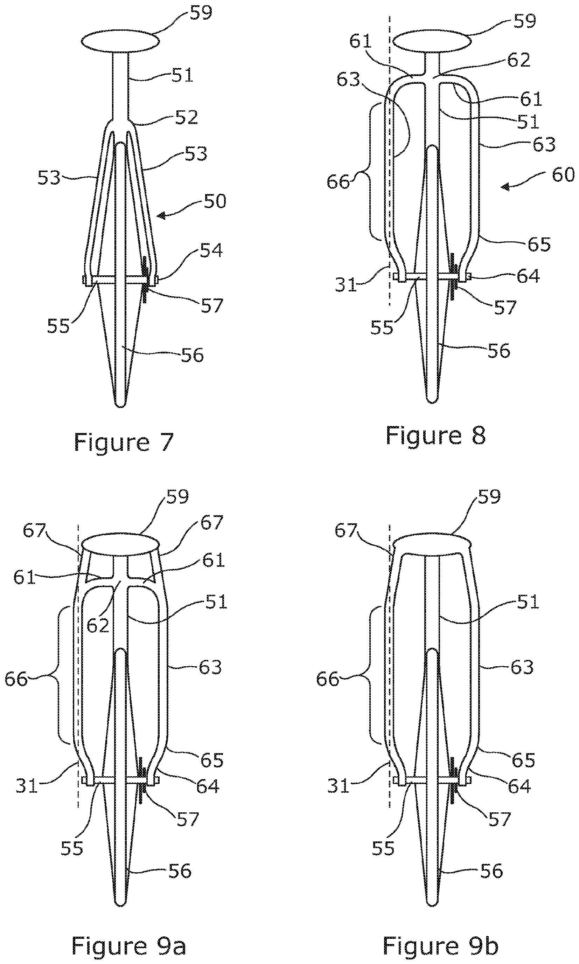

Turning now to figure 7, a schematic view of a pair of conventional bicycle seat stays 50 is shown. The conventional stays 50 comprise a crown 52 which is attached to the seat tube 51 of a bicycle and a pair of inclined stays 53 extending downwardly and rearwardly from the crown 52. At the lower end of stays 53 are provided axle receiving formations 54, typically slots or holes. A saddle 59 is provided at the top of seat tube 51. This enables the axle 55 and hence the rear wheel 56 of the bicycle, including gear set 57, to be fitted between the stays 53. As can be seen clearly in figure 7, the conventional stays 53 diverge outwardly away from the crown 52. Additionally, such stays 53 are relatively closely spaced with respect to a wheel fitted therebetween.

Turning now to figure 8, a schematic view of a pair of bicycle seat stays 60 according to the present invention is shown. The stays 60 are adapted to mount rear bicycle wheel 56 therebetween by connections to axle 55.

The stays 60 comprise a crown formed from a lateral member 61. As shown in figure 8, the lateral member 61 is substantially horizontal. Nevertheless, the skilled man will appreciate that the lateral member 61 could deviate from the horizontal upwardly

or downwardly. The lateral member 61 which is connected to the seat tube 51 at the midpoint 62. The length of the lateral member 61 is such its ends are roughly aligned with the axis 31 of the lower leg 38 of a rider 30, when in the riding position. For simplicity, in figure 8 only the axis 31 is illustrated rather than the rider 30.

Extending downwardly from each end of the lateral member 61 are downwardly projecting stays 63. At the lower ends of the stays 63 are axle receiving formations 64 for receiving the axle 55 of wheel 56. As shown in figure 8, the stays 63 each comprise a primary portion 66, the respective primary portions 66 extending downwardly and substantially parallel to each other and an inwardly inclined secondary portion 65 just above the formations 64. This facilitates fitting conventional bicycle wheels 56 into the stay 60. Nevertheless, the skilled man will appreciate that the inwardly inclined secondary portions 65 can be omitted if a wheel 66 with a longer axle 55 is fitted or if the axle receiving formations 64 are provided on cross-members projecting perpendicular to the stays 63.

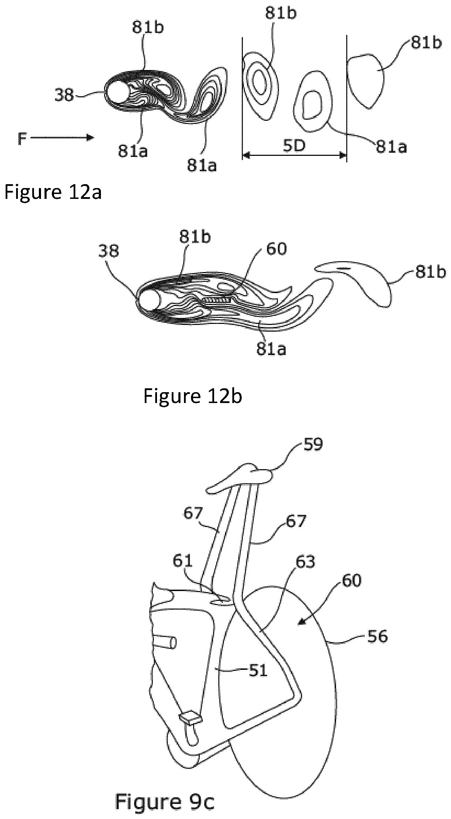

The alignment between the legs 38 and the stays 60 provides beneficial drag reduction for the leg 38 and stay 60 when considered together. This is a result of the splitter plate effect and is illustrated with reference to figure 12. In figure 12a, a cross-sectional plan of the lower leg 38 (approximated as a cylinder) and vortices 81a, 81b generated by airflow in the direction F is shown. As is shown, vortices of same rotation sense 81a are alternately shed by the 'leg' 38 with vortices of the opposite rotation sense 81b. Typically, there is a spacing of approximately 5 leg diameters (D) between each vortex of the same sense, thus indicating a vortex shed wavelength of 2.5D, although the skilled man will be aware that this vortex shed wavelength may vary with speed as well as leg diameter. As is shown in figure 12b, the provision of a stay 60 aligned with leg 38 within the vortex shed wavelength suppresses vortex formation in the wake of the leg 38. This can result in a corresponding reduction in the drag experienced by the leg 38. The separation of the stays from a typical, reference or average position of the leg 38 in the direction of motion, during the cycling action may also therefore be adjusted to match the vortex shed wavelength for as much of the pedal stroke as possible.

As in the front forks 40 discussed above, where close alignment between the axes 31 of the stays 63 and legs 38 can be maintained, considerable reductions in drag (of the order of, say, 1% to 1.5%) can be achieved.

Turning now to figure 9a, an alternative embodiment of the seat stays 60 is shown. This embodiment differs from the previous embodiment in that the crown comprises extension members 67 projecting upwardly from the lateral crown member 61. The extension members 47 maintain a substantially common alignment with the main portion 66 of the stays for much of their length. As such, they maintain a substantially common alignment with the rider's lower leg 38. Accordingly, the extension members 67 provide further improved drag performance for the combination of the bicycle 32 and rider 30, even if the overall frame drag is increased by the extension members 67. As is shown in figure 9a, the extension members 67 can be connected or integrated into saddle 70.

Turning now to figure 9b, a further alternative embodiment of the stays 60 is shown. This embodiment differs from the embodiment of figure 9a in that the lateral crown member 61 is omitted.

Turning now to figure 9c, a further alternative embodiment of the stays 60 is shown. This embodiment differs from the embodiment of figure 9a in that the seat tube 51 ends close to the point where it is connected to the lateral members 61. In this embodiment, the saddle 59 is thus supported only by the extension members 67 and not by a conventional seat post.

In the embodiments of figures 8, 9a, 9b and 9c the stays 63 can have cross-sectional profiles of the type shown in figure 5. Furthermore, if desired, the stays may be formed from a pair of parallel stay members, similar to the forks of figure 5 (e)-(g). Additionally, in the embodiments of figures 9a, 9b and 9c, the main portion 66 of stays 60 and/or the extension members 67 may optionally have telescopic sections. This can facilitate adjustment of the height of saddle 59.

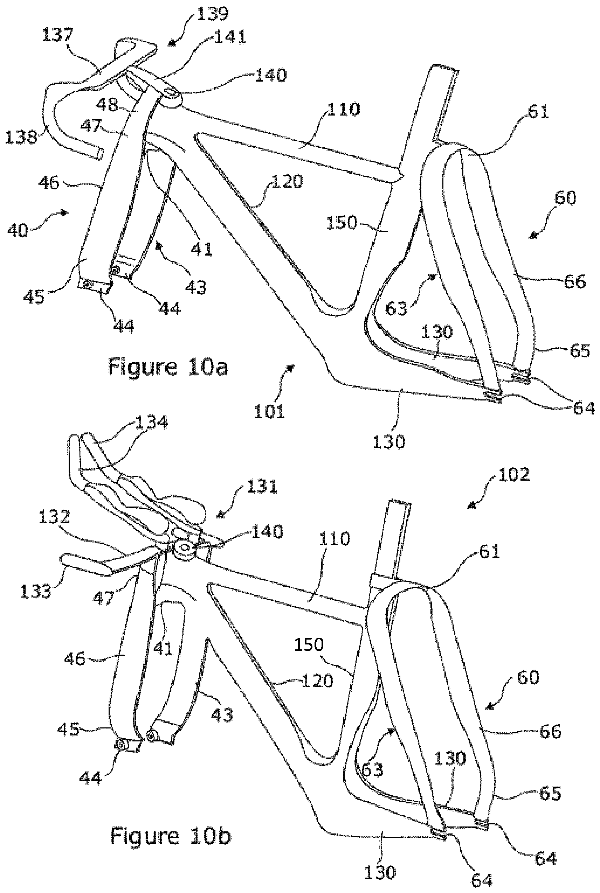

Turning now to figure 10, two alternative frame designs 101, 102 according to the present invention are illustrated. Each frame 101, 102 comprises a top tube 110, a down tube 120, chain stays 130, a stem 140 and a seat tube 150, as is known in the art. Each of the frame members 110-150 may have a cross-sectional profile in accordance with those disclosed in figure 5.

As is shown in figure 10a, the frame 101 comprises a set of front forks 40 similar to the embodiment shown in figure 6a, but where the extension members 47 connect to the stem 140 rather than the head tube and a pair of seat stays 60 according to the embodiment of figure 8. The frame 101 is further provided with a set of handle bars 139 comprising a substantially horizonal section 137 and a drop section 138. The frame 101 thereby provides a set of forks 40 that connect to the stem 141 connected to the head tube 140.

Track testing of a frame of the type shown in figure 10a has identified a drag reduction of the order of 1.5- 4%. The drag reduction achieved in practice is also dependent upon the speed and upon the rider, in particular the rider shape and/or rider position.

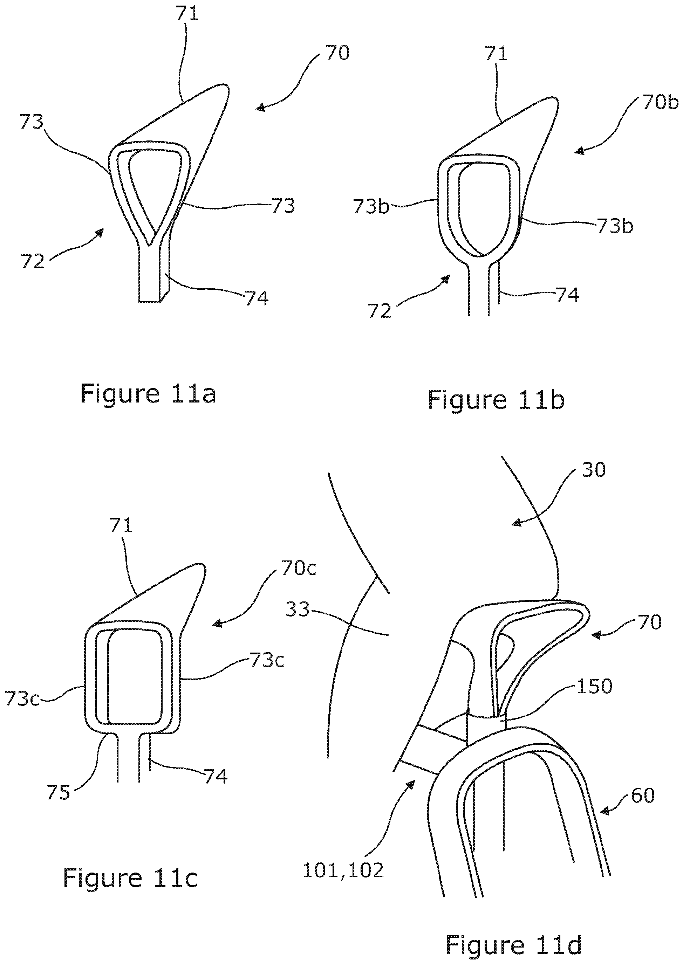

As is shown in figure 10b, the frame 102 comprises a pair of seat stays 60 according to the embodiment of figure 8. The frame 102 differs from frame 101 in that the front forks 40 are according to the embodiment of figure 6b. Additionally, the handle bars 131 have a different form comprising a substantially horizonal section 132, forward projecting end bars 133 and forward projecting arm bars 134. Turning now to figure 11, a saddle 70 comprises a seat surface 71 adapted to support a rider and a seat post 72. In the saddle shown, the seat post 72 comprises a pair of widely spaced limbs 73 and a trunk 74. The limbs 73 extend between the trunk 74 and the edges of the seat surface 71. The wide spacing is facilitated by the connection of the limbs 73 to the edges of the seat surface 71 rather than to the underside of the seat surface as is conventional. Indeed, in some embodiments, this can facilitate the provision of a saddle where the seat surface 71 and seat post 72 are integrally formed. This can provide a weight saving.

The trunk 74 may comprise a single integral member or two closely aligned limbs, each aligned limb integral with a respective limb 73. The trunk 74 thereby facilitates the adjustable fitting of the saddle 70 to a seat tube 51, 150 of a bicycle as is common in the art.

The bifurcated limbs 73 and/or the stem 74 can have a cross-sectional profile of the type shown in figure 5.

Turning to figure 11b and figure 11c, alternative saddles 70b and 70c are shown. The alternative saddle 70b differs from saddle 70 only in that the limbs 73b are curved in a 'U' form rather a 'V' form shown in figure 11a. The alternative saddle 70c differs from saddle 70 in that the limbs 73c extend downwardly parallel to each other and are joined to the trunk 74 by a lateral member 75 at their lower ends. Whilst a substantially horizontal lateral member 75 is shown, the skilled man will appreciate that the lateral member 75 may be curved or angled upwardly or downwardly as required or as appropriate.

Turning now to figure 11d, the saddle 70 of figure 11a is fitted to the seat tube 150 of a bicycle frame 101 or 102. As can be seen from this figure, the bifurcated limb 73 allows the saddle post 72 to lie close to the axes of the respective upper legs 33 of the rider. In this manner, each bifurcated limb 73 lies within the wake of the upper leg 33 during forward motion. As a result, the drag on the combination of seated rider 30 and saddle 70 is reduced, even if the seat post 72 alone could be expected to have an increased drag compared to a conventional saddle with a singular seat post.

The one or more embodiments are described above by way of example only. Many variations are possible without departing from the scope of protection afforded by the appended claims.

## Claims

1. A bicycle comprising a pair of seat stays (63), each seat stay (63) extending downwardly and substantially parallel to each other from a crown, the seat stays (63) widely spaced apart from each other and a wheel (56) mounted therebetween, **characterised in that** the stay spacing is in the range of Q-factor plus 40-90mm.

2. A bicycle (32) as claimed in claim 1 comprising:
a pair of front forks (43), each fork (43) extending downwardly and substantially parallel to each other from a second crown, the forks (43) widely spaced apart from each other and a wheel (36) mounted therebetween, the fork spacing being in the range of Q-factor plus 40-90mm.

3. A bicycle (32) as claimed in claim 2 wherein the fork spacing is in the range 180-240mm.

4. A bicycle (32) as claimed in either of claims 2 or 3 wherein each fork (43) comprises a primary portion (46) extending from the second crown, the primary portion (46) comprising a single substantially linear member and a secondary portion (45) connecting the primary portion (46) to an axle receiving formation (44) at the end of the fork (43) distal from the second crown.

5. A bicycle (32) as claimed in claim 4 wherein the second crown comprises one or more lateral members (41), preferably wherein the second crown comprises one or more extension members (47) projecting upwardly from said one or more lateral members (41), the extension members (47) in a common alignment with the forks (43) or at least the primary portions (46) of the forks.

6. A bicycle as claimed in claim 5 wherein the extension members (47) comprise a lateral section (49) at their upward end, or are connected to one or more lateral members (49) or a handle bar (39) at their upward end.

7. A bicycle (32) as claimed in any of claims 2 to 6 wherein the second crown is connected to a head tube (34).

8. A bicycle (32) as claimed in any preceding claim wherein each stay (63) comprises a primary portion (66) extending from the crown, the primary portion (66) comprising a single substantially linear member and a secondary portion (65) connecting the primary portion (66) to an axle receiving formation (64) at the end of the stay (63) distal from the crown.

9. A bicycle (32) as claimed in claim 8 wherein the crown comprises one or more lateral members (61), preferably wherein the crown comprises one or more extension members (67) projecting upwardly from said one or more lateral members (61), the extension members (67) being in a common alignment with the seat stays or at least the primary portions (66) of the stays.

10. A bicycle as claimed in claim 9 wherein the extension members (67) comprise a lateral section at their upward end, or are connected to one or more lateral members (61) or a saddle (70) at their upward end.

11. A bicycle (32) as claimed in any of claims 1 to 9 wherein the bicycle (32) is provided with a saddle (70) comprising a seat surface (71) and a seat post (72) wherein the seat post (72) comprises two widely spaced limbs (73), wherein the widely spaced limbs (73) have at least a portion separated by substantially the full width of the saddle (70), and the widely spaced limbs (73) are connected to the edges of the seat surface (71).

12. A method of fitting a bicycle (32) for a rider (30), the method comprising the steps of:
measuring the lower leg separation of the rider (30) in their normal riding position; and
either providing a bicycle (32) according to any one of claims 2 to 7 wherein the fork separation of the bicycle (32) is matched to the measured lower leg separation of the rider (30); or
providing a bicycle (32) according to any one of claims 1 to 11, wherein the seat stay separation is matched to the measured lower leg separation of the rider (30); or
providing a bicycle (32) according to claim 11 wherein the limb separation of the seat post (72) is matched to a measured hip separation of the rider (30).

## Patentansprüche

1. Fahrrad, umfassend ein Paar von Sitzstreben (63), wobei sich jede Sitzstrebe (63) von einer Krone aus abwärts und im Wesentlichen parallel zueinander erstreckt, wobei die Sitzstreben (63) weit voneinander beabstandet sind, und ein Rad (56) dazwischen montiert ist, **dadurch gekennzeichnet, dass** der Strebenabstand im Bereich eines Q-Faktors plus 40-90 mm ist.

2. Fahrrad (32) nach Anspruch 1, umfassend:
ein Paar von Vordergabeln (43), wobei sich jede Gabel (43) von einer zweiten Krone aus abwärts und im Wesentlichen parallel zueinander erstreckt, wobei die Gabeln (43) weit voneinander beabstandet sind und ein Rad (36) dazwischen montiert ist, wobei der Gabelabstand im Bereich eines Q-Faktors plus 40-90 mm ist.

3. Fahrrad (32) nach Anspruch 2, wobei der Gabelabstand im Bereich von 180-240 mm ist.

4. Fahrrad (32) nach Anspruch 2 oder 3, wobei jede Gabel (43) einen primären Bereich (46) umfasst, der sich von der zweiten Krone aus erstreckt, wobei der primäre Bereich (46) ein einzelnes, im Wesentlichen lineares Bauteil umfasst, und einen sekundären Bereich (45), der den primären Bereich (46) mit einer Achsaufnahmeformation (44) an dem von der zweiten Krone distalen Ende der Gabel (43) verbindet.

5. Fahrrad (32) nach Anspruch 4, wobei die zweite Krone ein oder mehr laterale Bauteile (41) umfasst, wobei vorzugsweise die zweite Krone ein oder mehr Verlängerungsbauteile (47) umfasst, die von dem einen oder mehr lateralen Bauteilen (41) aus aufwärts vorstehen, wobei die Verlängerungsbauteile (47) in einer gemeinsamen Ausrichtung mit den Gabeln (43) oder zumindest den primären Bereichen (46) der Gabeln sind.

6. Fahrrad nach Anspruch 5, wobei die Verlängerungsbauteile (47) an ihrem aufwärtigen Ende einen lateralen Abschnitt (49) umfassen oder an ihrem aufwärtigen Ende mit einem oder mehr lateralen Bauteilen (49) oder einem Lenker (39) verbunden sind.

7. Fahrrad (32) nach einem der Ansprüche 2 bis 6, wobei die zweite Krone mit einem Steuerrohr (34) verbunden ist.

8. Fahrrad (2) nach einem der vorhergehenden Ansprüche, wobei jede Strebe (63) einen primären Bereich (66) umfasst, der sich von der Krone aus erstreckt, wobei der primäre Bereich (66) ein einzelnes, im Wesentlichen lineares Bauteil umfasst, und einen sekundären Bereich (65), der den primären Bereich (66) mit einer Achsaufnahmeformation (64) an dem von der Krone distalen Ende der Strebe (63) verbindet.

9. Fahrrad (32) nach Anspruch 8, wobei die Krone ein oder mehr laterale Bauteile (61) umfasst, wobei vorzugsweise die Krone ein oder mehr Verlängerungsbauteile (67) umfasst, die von dem einen oder mehr lateralen Bauteilen (61) aus aufwärts vorstehen, wobei die Verlängerungsbauteile (67) in einer gemeinsamen Ausrichtung mit den Sitzstreben oder zumindest den primären Bereichen (66) der Streben sind.

10. Fahrrad nach Anspruch 9, wobei die Verlängerungsbauteile (67) an ihrem aufwärtigen Ende einen lateralen Abschnitt umfassen oder an ihrem aufwärtigen Ende mit einem oder mehr lateralen Bauteilen (61) oder einem Sattel (70) verbunden sind.

11. Fahrrad (32) nach einem der Ansprüche 1 bis 9, wobei das Fahrrad (32) mit einem Sattel (70) versehen ist, der eine Sitzoberfläche (71) und eine Sattelstütze (72) umfasst, wobei die Sattelstütze (72) zwei weit beabstandete Äste (73) umfasst, wobei die weit beabstandeten Äste (73) wenigstens einen Bereich haben, der im Wesentlichen um die volle Breite des Sattels (70) separiert ist, und wobei die weit beabstandeten Äste (73) mit den Rändern der Sitzoberfläche (71) verbunden sind.

12. Verfahren zum Anpassen eines Fahrrads (32) für einen Fahrer (30), wobei das Verfahren die folgenden Schritte umfasst:
Messen der Unterschenkelseparation des Fahrers (30) in ihrer normalen Fahrposition; und
entweder Bereitstellen eines Fahrrads (32) nach einem der Ansprüche 2 bis 7, wobei die Gabelseparation des Fahrrads (32) an die gemessene Unterschenkelseparation des Fahrers (30) angepasst ist; oder
Bereitstellen eines Fahrrads (32) nach einem der Ansprüche 1 bis 11, wobei die Sitzstrebenseparation an die gemessene Unterschenkelseparation des Fahrers (30) angepasst ist; oder
Bereitstellen eines Fahrrads (32) nach Anspruch 11, wobei die Astseparation der Sattelstütze (72) an eine gemessene Hüftseparation des Fahrers (30) angepasst ist.

## Revendications

1. Bicyclette comprenant une paire de montants (63) de selle, chaque montant (63) de selle s'étendant vers le bas et à partir d'une couronne en étant sensiblement parallèles entre eux, les montants (63) de selle étant écartés en largeur l'un de l'autre et une roue (56) étant montée entre eux, **caractérisée en ce que** l'écartement des montants est dans la plage du facteur Q plus 40-90 mm.

2. Bicyclette (32) suivant la revendication 1 comprenant :
une paire de fourches (43) avant, chaque fourche (43) s'étendant vers le bas et à partir d'une deuxième couronne en étant sensiblement parallèles entre elles, les fourches (43) étant écartées en largeur l'une de l'autre et une roue (36) étant montée entre elles, l'écartement des fourches étant dans la plage du facteur Q plus 40-90 mm.

3. Bicyclette (32) suivant la revendication 2, dans laquelle l'écartement des fourches est dans la plage de 180-240 mm.

4. Bicyclette (32) suivant la revendication 2 ou 3, dans laquelle chaque fourche (43) comprend un tronçon (46) primaire s'étendant à partir de la deuxième couronne, le tronçon (46) primaire comprenant un élément unique sensiblement linéaire et un tronçon (45) secondaire reliant le tronçon (46) primaire à une conformation (44) recevant un axe à l'extrémité de la fourche (43) distale à partir de la deuxième couronne.

5. Bicyclette (32) suivant la revendication 4, dans laquelle la deuxième couronne comprend un ou plusieurs éléments (41) latéraux, dans laquelle, de préférence la deuxième couronne comprend un ou plusieurs éléments (47) de prolongement faisant saillie vers le haut à partir dudit un ou plusieurs éléments (41) latéraux, les éléments (47) de prolongement étant en alignement commun avec les fourches (43) ou avec au moins les tronçons (46) primaires des fourches.

6. Bicyclette suivant la revendication 5, dans laquelle les éléments (47) de prolongement comprennent une partie (49) latérale à leur extrémité vers le haut, ou sont reliés à un ou plusieurs éléments (49) latéraux ou à un guidon (39) à leur extrémité vers le haut.

7. Bicyclette (32) suivant l'une quelconque des revendications 2 à 6, dans laquelle la deuxième couronne est reliée à un tube (34) de direction.

8. Bicyclette (32) suivant l'une quelconque des revendications précédentes, dans laquelle chaque montant (63) comprend un tronçon (66) primaire s'étendant à partir de la couronne, le tronçon (66) primaire comprenant un élément unique sensiblement linéaire et un tronçon (65) secondaire reliant le tronçon (66) primaire à une conformation (64) recevant un axe à l'extrémité du montant (63) distale de la couronne.

9. Bicyclette (32) suivant la revendication 8, dans laquelle la couronne comprend un ou plusieurs éléments (61) latéraux, dans laquelle, de préférence la couronne comprend un ou plusieurs éléments (67) de prolongement faisant saillie vers le haut à partir dudit un ou plusieurs éléments (61) latéraux, les éléments (67) de prolongement étant en alignement commun avec les montants de la selle, ou avec au moins les tronçons (66) primaires des montants.

10. Bicyclette suivant la revendication 9, dans laquelle les éléments (67) de prolongement comprennent une partie latérale à leur extrémité vers le haut, ou sont reliés à un ou à plusieurs éléments (61) latéraux ou à une selle (70) à leur extrémité vers le haut.

11. Bicyclette (32) suivant l'une quelconque des revendications 1 à 9, dans laquelle la bicyclette (32) est pourvue d'une selle (70) comprenant une surface (71) d'assise et un montant (72) d'assise, dans laquelle le montant (72) d'assise comprend deux branches (73) écartées en largeur, dans laquelle les branches (73) écartées en largeur ont au moins un tronçon séparé de sensiblement toute la largeur de la selle (70) et les branches (73) écartées en largeur sont reliées aux bords de la surface (71) d'assise.

12. Procédé d'adaptation d'une bicyclette (32) à un coureur (30), le procédé comprenant les stades dans lesquels :
on mesure l'écartement inférieur des jambes du coureur (30) dans leur position de course normale ; et
ou bien on se procure une bicyclette (32) suivant l'une quelconque des revendications 2 à 7, dans laquelle l'écartement des fourches de la bicyclette (32) est adapté à l'écartement inférieur mesuré des jambes du coureur (30) ; ou bien
on se procure une bicyclette (32) suivant l'une quelconque des revendications 1 à 11, dans laquelle l'écartement des montants de selle est adaptée à l'écartement inférieur mesuré des jambes du coureur (30) ; ou bien
on se procure une bicyclette (32) suivant la revendication 11, dans laquelle l'écartement des branches du montant (72) d'assise est adapté à un écartement mesuré des hanches du coureur (30).
